# EUROPEAN PATENT APPLICATION

(11) **EP 4 546 930 A1**
(43) Date of publication of application: **30.04.2025**
(21) Application number: 23845191.8
(22) Date of filing: 28.06.2023
(51) Int. Cl.: H04W 74/08

(54) **WIFI COMMUNICATION METHOD, APPARATUS AND SYSTEM**

(30) Priority: 29.07.2022 CN 202210910957
(71) Applicant: Huawei Technologies Co., Ltd., Shenzhen, Guangdong 518129 (CN)
(72) Inventor: RUAN, Wei, Shenzhen, Guangdong 518129 (CN); LIU, Weiqiang, Shenzhen, Guangdong 518129 (CN); CHEN, Cong, Shenzhen, Guangdong 518129 (CN)
(74) Representative: Maiwald GmbH
(86) International application number: PCT/CN2023/103377
(87) International publication number: WO 2024/021978

(57) **Abstract**

A Wi-Fi communication method, apparatus, and system are provided, relate to the field of communication technologies, and are used to reduce a latency and latency jitter of Wi-Fi communication. The method includes: An access device sends a scheduling signal to a station device, where the scheduling signal is used to schedule a scheduling frequency band, or a scheduling frequency band and a contention frequency band, the contention frequency band is an existing frequency band for Wi-Fi communication, the scheduling frequency band is different from the contention frequency band, and the scheduling frequency band may not be an existing frequency band for Wi-Fi communication; and the access device communicates with the station device on the frequency band scheduled by using the scheduling signal, for example, transmits uplink data or downlink data on the scheduling frequency band, or the scheduling frequency band and the contention frequency band.

## Description

This application claims priority to Chinese Patent Application No. 202210910957.4, filed with the China National Intellectual Property Administration on July 29, 2022 and entitled "WI-FI COMMUNICATION METHOD, APPARATUS, AND SYSTEM", which is incorporated herein by reference in its entirety.

### TECHNICAL FIELD

This application relates to the field of communication technologies, and in particular, to a Wi-Fi communication method, apparatus, and system.

### BACKGROUND

Since the release of a wireless fidelity (Wireless Fidelity, Wi-Fi) technology, six generations of Wi-Fi systems (801.11, 802.11b, 802.11a/g, 802.11n, 802.11ac, 802.11ax) have been developed and popularized. Each generation of 802.11 Wi-Fi systems greatly increases a rate. The 802.11 working group designates 2G and 5G frequency bands as wireless channels, and each frequency band is further divided into several channels. In addition, the 802.11 working group further designates an operating frequency band of each channel, and a minimum interval between operating frequency bands of channels in the Wi-Fi system is 20 MHz.

In the Wi-Fi system, a wireless channel has a feature of having only one collision domain. Therefore, a random access mechanism needs to be introduced to avoid a collision problem caused by simultaneous access of a plurality of nodes to a network. The random access mechanism is carrier sense multiple access with collision avoidance (Carrier Sense Multiple Access with Collision Avoidance, CSMA/CA). The CSMA/CA mechanism is as follows: When a device learns that a channel is empty through listening, the device waits for one interframe space; then, the device listens to the channel again, and starts a random backoff process if the channel is still empty; and after the random backoff process, if the device learns that the channel is still empty through listening, the device starts to send data. In the foregoing process, if the channel becomes busy at any time, the foregoing process is terminated, and the device waits until the channel becomes empty again. Then, the foregoing process is repeated (that is, starting from waiting for the interframe space). Therefore, the CSMA/CA mechanism has a problem that it is difficult to ensure a latency and latency jitter.

### SUMMARY

This application provides a Wi-Fi communication method and apparatus, to resolve a problem that it is difficult to ensure a latency and latency jitter in Wi-Fi communication in a current technology.

To achieve the foregoing objective, this application uses the following technical solutions.

According to a first aspect, a Wi-Fi communication method is provided, where the method includes: An access device sends a scheduling signal to a station device, where the scheduling signal is used to schedule a scheduling frequency band, or a scheduling frequency band and a contention frequency band, the contention frequency band is an existing frequency band for Wi-Fi communication, the scheduling frequency band is different from the contention frequency band, and the scheduling frequency band may not be an existing frequency band for Wi-Fi communication, for example, the contention frequency band may be an existing frequency band allocated to Wi-Fi communication in a 5G frequency band or a 2G frequency band, and a bandwidth of the contention frequency band may be an integer multiple of 20 MHz, the scheduling frequency band may be an existing frequency band that is in the 5G frequency band or the 2G frequency band and that is not allocated to Wi-Fi communication, and a bandwidth of the scheduling frequency band may not be an integer multiple of 20 MHz; and the access device communicates with the station device on the frequency band scheduled by using the scheduling signal.

In the foregoing technical solution, the access device may schedule the scheduling frequency band, or the scheduling frequency band and the contention frequency band, to perform Wi-Fi communication with the station device on the scheduling frequency band and/or the contention frequency band. This avoids that the access device and the station device can perform communication only on the contention frequency band according to a CSMA/CA mechanism in a current technology, to reduce a latency and latency jitter of Wi-Fi communication, and reduce communication interference. In addition, when both the scheduling frequency band and the contention frequency band are used for Wi-Fi communication, a communication bandwidth can be further increased, and a transmission rate can be further increased.

In a possible implementation of the first aspect, if the scheduling signal is used to schedule the scheduling frequency band, that the access device communicates with the station device on the frequency band scheduled by using the scheduling signal includes: The access device sends a first downlink data frame to the station device on the scheduling frequency band. If the scheduling signal is used to schedule the scheduling frequency band and the contention frequency band, the method further includes: The access device sends a first downlink data frame to the station device on the scheduling frequency band, and sends a second downlink data frame to the station device on the contention frequency band. In the foregoing possible implementation, the access device may send the downlink data to the station device on the scheduling frequency band or the scheduling frequency band and the contention frequency band, so that a latency and latency jitter of downlink transmission can be reduced, and a communication bandwidth of the downlink data can be further increased, thereby increasing a transmission rate.

In a possible implementation of the first aspect, a frame header and a frame trailer of the first downlink data frame are respectively aligned with a frame header and a frame trailer of the second downlink data frame. Optionally, the first downlink data frame includes preamble information, and the preamble information indicates whether the second downlink data frame includes downlink data of the station device. In the foregoing possible implementation, the access device that supports only a single-input single-output communication mode can send the first downlink data frame and the second downlink data frame at the same time on the scheduling frequency band and the contention frequency band, to increase a communication bandwidth of the access device, increase a transmission rate, and reduce a latency and latency jitter of downlink transmission.

In a possible implementation of the first aspect, the first downlink data frame and the second downlink data frame are independent of each other. In the foregoing possible implementation, it can be ensured that modulation and demodulation processes of the first downlink data frame and the second downlink data frame do not affect each other, to increase stability of downlink data transmission on any frequency band.

In a possible implementation of the first aspect, the scheduling signal is used to schedule the scheduling frequency band and the contention frequency band, and that the access device communicates with the station device on the frequency band scheduled by using the scheduling signal includes: The access device sends a third downlink data frame to the station device on the scheduling frequency band and the contention frequency band. In the foregoing possible implementation, the access device may send the downlink data to the station device on both the scheduling frequency band and the contention frequency band, to increase a communication bandwidth of the downlink data, increase a transmission rate, and reduce a latency and latency jitter of downlink transmission.

In a possible implementation of the first aspect, the method further includes: The access device sends a first beacon frame on the scheduling frequency band, where the first beacon frame indicates basic service information of the access device, and the first beacon frame carries the scheduling signal; and the access device provides an access service for the station device on the scheduling frequency band based on the basic service information. In the foregoing possible implementation, the access device may send the first beacon frame on the scheduling frequency band, so that the station device accesses the access device on the scheduling frequency band, to increase an access success rate and reduce access power consumption.

In a possible implementation of the first aspect, the method further includes: The access device sends a second beacon frame on the contention frequency band, where the second beacon frame indicates the basic service information of the access device and the scheduling frequency band, and the second beacon frame carries the scheduling signal; and the access device provides the access service for the station device on the scheduling frequency band based on the basic service information. In the foregoing possible implementation, the access device may send the second beacon frame on the contention frequency band, where the second beacon frame indicates the scheduling frequency band, so that the station device accesses the access device on the scheduling frequency band, to increase the access success rate and reduce access power consumption.

In a possible implementation of the first aspect, the method further includes: The access device sends uplink scheduling information to the station device on the scheduling frequency band, where the uplink scheduling information is used to schedule uplink data; and the access device receives an uplink data frame from the station device on the scheduling frequency band. In the foregoing possible implementation, the access device may send the uplink scheduling information on the scheduling frequency band, so that the station device sends the uplink data to the access device on the scheduling frequency band, to increase a communication bandwidth of the uplink data, increase a transmission rate, and reduce a latency and latency jitter of downlink transmission.

In a possible implementation of the first aspect, the uplink scheduling information is carried in a trigger frame; or the uplink scheduling information is carried in a beacon frame corresponding to the scheduling frequency band. In the foregoing possible implementation, several simple and effective manners of carrying the uplink scheduling information are provided.

In a possible implementation of the first aspect, the uplink scheduling information is sent based on an uplink request of the station device, where the uplink request is carried in a trigger-based null data packet TB NDP frame, or the uplink request is carried in a block acknowledgment BA frame of the station device. In the foregoing possible implementation, several simple and effective manners of carrying the uplink request of the station device are provided.

In a possible implementation of the first aspect, the method further includes: The access device receives at least one third beacon frame from another access device, where the at least one third beacon frame indicates at least one scheduling frequency band; and the access device determines an available scheduling frequency band other than the at least one scheduling frequency band as the scheduling frequency band. In the foregoing possible implementation, different scheduling frequency bands may be used between the access device and the another access device in a frequency division multiplexing manner, to avoid interference between a plurality of access devices, and further reduce a latency and latency jitter of Wi-Fi communication.

In a possible implementation of the first aspect, that the access device determines the scheduling frequency band includes: The access device receives at least one third beacon frame from another access device, where the at least one third beacon frame indicates at least one slot in the scheduling frequency band; and the access device determines to use an available slot other than the at least one slot in the scheduling frequency band. In the foregoing possible implementation, the access device and the another access device may use different slots in a same scheduling frequency band in a time division multiplexing manner, to avoid interference between a plurality of access devices, and further reduce a latency and latency jitter of Wi-Fi communication.

According to a second aspect, a Wi-Fi communication method is provided, where the method includes: A station device receives a scheduling signal from an access device, where the scheduling signal is used to schedule a scheduling frequency band, or a scheduling frequency band and a contention frequency band, the contention frequency band is an existing frequency band for Wi-Fi communication, the scheduling frequency band is different from the contention frequency band, and the scheduling frequency band may not be an existing frequency band for Wi-Fi communication, for example, the contention frequency band may be an existing frequency band allocated to Wi-Fi communication in a 5G frequency band or a 2G frequency band, and a bandwidth of the contention frequency band may be an integer multiple of 20 MHz, the scheduling frequency band may be an existing frequency band that is in the 5G frequency band or the 2G frequency band and that is not allocated to Wi-Fi communication, and a bandwidth of the scheduling frequency band may not be an integer multiple of 20 MHz; and the station device communicates with the access device on the frequency band scheduled by using the scheduling signal.

In the foregoing technical solution, the access device may schedule the scheduling frequency band, or the scheduling frequency band and the contention frequency band, to perform Wi-Fi communication with the station device on the scheduling frequency band and/or the contention frequency band. This avoids that the access device and the station device can perform communication only on the contention frequency band according to a CSMA/CA mechanism in a current technology, to reduce a latency and latency jitter of Wi-Fi communication, and reduce communication interference. In addition, when both the scheduling frequency band and the contention frequency band are used for Wi-Fi communication, a communication bandwidth can be further increased, and a transmission rate can be further increased.

In a possible implementation of the second aspect, the scheduling signal is used to schedule the scheduling frequency band and the contention frequency band, and that the station device communicates with the access device on the frequency band scheduled by using the scheduling signal includes: The station device receives a first downlink data frame from the access device on the scheduling frequency band, and receives a second downlink data frame from the station device on the contention frequency band. In the foregoing possible implementation, the access device may separately send the downlink data to the station device on the scheduling frequency band and the contention frequency band, to increase a communication bandwidth of the downlink data, increase a transmission rate, and reduce a latency and latency jitter of downlink transmission.

In a possible implementation of the second aspect, a frame header and a frame trailer of the first downlink data frame are respectively aligned with a frame header and a frame trailer of the second downlink data frame. Optionally, the first downlink data frame includes preamble information, and the preamble information indicates whether the second downlink data frame includes downlink data of the station device. In the foregoing possible implementation, the access device that supports only a single-input single-output communication mode can send the first downlink data frame and the second downlink data frame at the same time on the scheduling frequency band and the contention frequency band, to increase a communication bandwidth of the access device, increase a transmission rate, and reduce a latency and latency jitter of downlink transmission.

In a possible implementation of the second aspect, the first downlink data frame and the second downlink data frame are independent of each other. In the foregoing possible implementation, it can be ensured that modulation and demodulation processes of the first downlink data frame and the second downlink data frame do not affect each other, to increase stability of downlink data transmission on any frequency band.

In a possible implementation of the second aspect, the scheduling signal is used to schedule the scheduling frequency band and the contention frequency band, and that the station device communicates with the access device on the frequency band scheduled by using the scheduling signal includes: The station device receives a third downlink data frame from the access device on the scheduling frequency band and the contention frequency band. In the foregoing possible implementation, the access device may send the downlink data to the station device on both the scheduling frequency band and the contention frequency band, to increase a communication bandwidth of the downlink data, increase a transmission rate, and reduce a latency and latency jitter of downlink transmission.

In a possible implementation of the second aspect, the method further includes: The station device receives a first beacon frame from the access device on the scheduling frequency band, where the first beacon frame indicates basic service information of the access device, and the first beacon frame carries the scheduling signal; and the station device accesses the access device on the scheduling frequency band based on the basic service information. In the foregoing possible implementation, the access device sends the first beacon frame on the scheduling frequency band, and the station device may access the access device on the scheduling frequency band, to increase an access success rate and reduce access power consumption.

In a possible implementation of the second aspect, the method further includes: The station device receives a second beacon frame from the access device on the contention frequency band, where the second beacon frame indicates the basic service information of the access device and the scheduling frequency band, and the second beacon frame carries the scheduling signal; and the station device accesses the access device on the scheduling frequency band based on the basic service information. In the foregoing possible implementation, the access device sends the second beacon frame on the contention frequency band, where the second beacon frame indicates the scheduling frequency band, and the station device may access the access device on the scheduling frequency band, to increase an access success rate and reduce access power consumption.

In a possible implementation of the second aspect, the method further includes: The station device receives uplink scheduling information from the access device on the scheduling frequency band, where the uplink scheduling information is used to schedule uplink data; and the station device sends an uplink data frame to the access device on the scheduling frequency band based on the uplink scheduling information. In the foregoing possible implementation, the access device may send the uplink scheduling information on the scheduling frequency band, so that the station device sends the uplink data to the access device on the scheduling frequency band, to increase a communication bandwidth of the uplink data, increase a transmission rate, and reduce a latency and latency jitter of downlink transmission.

In a possible implementation of the second aspect, the uplink scheduling information is carried in a trigger frame; or the uplink scheduling information is carried in a beacon frame corresponding to the scheduling frequency band. In the foregoing possible implementation, several simple and effective manners of carrying the uplink scheduling information are provided.

In a possible implementation of the second aspect, the uplink scheduling information is sent based on an uplink request of the station device, where the uplink request is carried in a trigger-based null data packet TB NDP frame, or the uplink request is carried in a block acknowledgment BA frame of the station device. In the foregoing possible implementation, several simple and effective manners of carrying the uplink request of the station device are provided.

According to a third aspect, a Wi-Fi communication apparatus is provided, where the apparatus includes: a sending unit, configured to send a scheduling signal to a station device, where the scheduling signal is used to schedule the scheduling frequency band, or a scheduling frequency band and a contention frequency band, the contention frequency band is an existing frequency band for Wi-Fi communication, the scheduling frequency band is different from the contention frequency band, and the scheduling frequency band may not be an existing frequency band for Wi-Fi communication; and a processing unit, configured to communicate with the station device on the frequency band scheduled by using the scheduling signal.

In a possible implementation of the third aspect, the scheduling signal is used to schedule the scheduling frequency band and the contention frequency band, and the sending unit is further configured to: send a first downlink data frame to the station device on the scheduling frequency band, and send a second downlink data frame to the station device on the contention frequency band.

In a possible implementation of the third aspect, a frame header and a frame trailer of the first downlink data frame are respectively aligned with a frame header and a frame trailer of the second downlink data frame. Optionally, the first downlink data frame includes preamble information, and the preamble information indicates whether the second downlink data frame includes downlink data of the station device.

In a possible implementation of the third aspect, the first downlink data frame and the second downlink data frame are independent of each other.

In a possible implementation of the third aspect, the scheduling signal is used to schedule the scheduling frequency band and the contention frequency band, and the sending unit is further configured to: send a third downlink data frame to the station device on the scheduling frequency band and the contention frequency band.

In a possible implementation of the third aspect, the sending unit is further configured to send a first beacon frame on the scheduling frequency band, where the first beacon frame indicates basic service information of the access device, and the first beacon frame carries the scheduling signal; and the processing unit is further configured to provide an access service for the station device on the scheduling frequency band based on the basic service information.

In a possible implementation of the third aspect, the sending unit is further configured to send a second beacon frame on the contention frequency band, where the second beacon frame indicates the basic service information of the access device and the scheduling frequency band, and the second beacon frame carries the scheduling signal; and the processing unit is further configured to provide the access service for the station device on the scheduling frequency band based on the basic service information.

In a possible implementation of the third aspect, the apparatus further includes a receiving unit. The sending unit is further configured to send uplink scheduling information to the station device on the scheduling frequency band, where the uplink scheduling information is used to schedule uplink data; and the receiving unit is configured to receive an uplink data frame from the station device on the scheduling frequency band.

In a possible implementation of the third aspect, the uplink scheduling information is carried in a trigger frame; or the uplink scheduling information is carried in a beacon frame corresponding to the scheduling frequency band.

In a possible implementation of the third aspect, the uplink scheduling information is sent based on an uplink request of the station device, where the uplink request is carried in a trigger-based null data packet TB NDP frame, or the uplink request is carried in a block acknowledgment BA frame of the station device.

In a possible implementation of the third aspect, the apparatus further includes: the receiving unit, where the receiving unit is further configured to receive at least one third beacon frame from another access device, where the at least one third beacon frame indicates at least one scheduling frequency band; and the processing unit is further configured to determine an available scheduling frequency band other than the at least one scheduling frequency band as the scheduling frequency band.

In a possible implementation of the third aspect, the apparatus further includes: the receiving unit, where the receiving unit is further configured to receive at least one third beacon frame from another access device, where the at least one third beacon frame indicates at least one second slot in the scheduling frequency band; and the processing unit is further configured to determine to use an available slot other than the at least one slot in the scheduling frequency band.

According to a fourth aspect, a Wi-Fi communication apparatus is provided, where the apparatus includes: a receiving unit, configured to receive a scheduling signal from an access device, where the scheduling signal is used to schedule a scheduling frequency band, or a scheduling frequency band and a contention frequency band, the contention frequency band is an existing frequency band for Wi-Fi communication, the scheduling frequency band is different from the contention frequency band, and the scheduling frequency band may not be an existing frequency band for Wi-Fi communication; and a processing unit, configured to communicate with the access device on the frequency band scheduled by using the scheduling signal.

In a possible implementation of the fourth aspect, the scheduling signal is used to schedule the scheduling frequency band and the contention frequency band, and the receiving unit is further configured to: receive a first downlink data frame from the access device on the scheduling frequency band, and receive a second downlink data frame from the station device on the contention frequency band.

In a possible implementation of the fourth aspect, a frame header and a frame trailer of the first downlink data frame are respectively aligned with a frame header and a frame trailer of the second downlink data frame. Optionally, the first downlink data frame includes preamble information, and the preamble information indicates whether the second downlink data frame includes downlink data of the station device.

In a possible implementation of the fourth aspect, the first downlink data frame and the second downlink data frame are independent of each other.

In a possible implementation of the fourth aspect, the scheduling signal is used to schedule the scheduling frequency band and the contention frequency band, and the receiving unit is further configured to: receive a third downlink data frame from the access device on the scheduling frequency band and the contention frequency band.

In a possible implementation of the fourth aspect, the apparatus further includes a processing unit; the receiving unit is further configured to receive a first beacon frame from the access device on the scheduling frequency band, where the first beacon frame indicates basic service information of the access device, and the first beacon frame carries the scheduling signal; and the processing unit is configured to access the access device on the scheduling frequency band based on the basic service information.

In a possible implementation of the fourth aspect, the apparatus further includes a processing unit; the receiving unit is further configured to receive a second beacon frame from the access device on the contention frequency band, where the second beacon frame indicates the basic service information of the access device and the scheduling frequency band, and the second beacon frame carries the scheduling signal; and the processing unit is further configured to access the access device on the scheduling frequency band based on the basic service information.

In a possible implementation of the fourth aspect, the apparatus further includes a sending unit; the receiving unit is further configured to receive uplink scheduling information from the access device on the scheduling frequency band, where the uplink scheduling information is used to schedule uplink data; and the sending unit is configured to send an uplink data frame to the access device on the scheduling frequency band based on the uplink scheduling information.

In a possible implementation of the fourth aspect, the uplink scheduling information is carried in a trigger frame; or the uplink scheduling information is carried in a beacon frame corresponding to the scheduling frequency band.

In a possible implementation of the fourth aspect, the uplink scheduling information is sent based on an uplink request of the station device, where the uplink request is carried in a trigger-based null data packet TB NDP frame, or the uplink request is carried in a block acknowledgment BA frame of the station device.

According to a fifth aspect, a Wi-Fi communication apparatus is provided, where the apparatus includes a memory, a processor, a system bus, and a communication interface, the memory stores code and data, the processor is connected to the memory via the system bus, and the processor runs the code in the memory, so that the apparatus performs the Wi-Fi communication method provided in the first aspect or any possible implementation of the first aspect.

According to a sixth aspect, a Wi-Fi communication apparatus is provided, where the apparatus includes a memory, a processor, a system bus, and a communication interface, the memory stores code and data, the processor is connected to the memory via the system bus, and the processor runs the code in the memory, so that the apparatus performs the Wi-Fi communication method provided in the second aspect or any possible implementation of the second aspect.

According to still another aspect of this application, a Wi-Fi communication system is provided. The Wi-Fi communication system includes an access device and a station device. The access device is the Wi-Fi communication apparatus provided in the third aspect, any possible implementation of the third aspect, or the fifth aspect. The station device is the Wi-Fi communication apparatus provided in the fourth aspect, any possible implementation of the fourth aspect, or the sixth aspect.

According to still another aspect of this application, a computer-readable storage medium is provided. The computer-readable storage medium stores computer-executable instructions. When a processor of a device executes the computer-executable instructions, the device performs the Wi-Fi communication method provided in the first aspect or any possible implementation of the first aspect.

According to still another aspect of this application, a computer-readable storage medium is provided. The computer-readable storage medium stores computer-executable instructions. When a processor of a device executes the computer-executable instructions, the device performs the Wi-Fi communication method provided in the second aspect or any possible implementation of the second aspect.

According to still another aspect of this application, a computer program product is provided. The computer program product includes computer-executable instructions, and the computer-executable instructions are stored in a computer-readable storage medium. At least one processor of a device may read the computer-executable instructions from the computer-readable storage medium, and the processor executes the computer-executable instructions, so that the device performs the Wi-Fi communication method according to the first aspect or any possible implementation of the first aspect.

According to still another aspect of this application, a computer program product is provided. The computer program product includes computer-executable instructions, and the computer-executable instructions are stored in a computer-readable storage medium. A processor of a device may read the computer-executable instructions from the computer-readable storage medium, and the processor executes the computer-executable instructions, so that the device performs the Wi-Fi communication method according to the second aspect or any possible implementation of the second aspect.

It may be understood that any Wi-Fi communication apparatus, Wi-Fi communication system, computer storage medium, or computer program product provided above is configured to perform the corresponding method provided above. Therefore, for beneficial effects that can be achieved by the Wi-Fi communication apparatus, the Wi-Fi communication system, the computer storage medium, or the computer program product, refer to beneficial effects in the corresponding method provided above. Details are not described herein again.

### BRIEF DESCRIPTION OF DRAWINGS

FIG. 1 is a schematic diagram of a structure of a Wi-Fi communication system according to an embodiment of this application;
FIG. 2 is a schematic diagram of a structure of a Wi-Fi device according to an embodiment of this application;
FIG. 3 is a schematic flowchart of a Wi-Fi communication method according to an embodiment of this application;
FIG. 4 is a schematic diagram of sending a scheduling signal by an access device according to an embodiment of this application;
FIG. 5 is another schematic flowchart of a Wi-Fi communication method according to an embodiment of this application;
FIG. 6 is a schematic diagram of data frames on a scheduling frequency band and a contention frequency band according to an embodiment of this application;
FIG. 7 is still another schematic flowchart of a Wi-Fi communication method according to an embodiment of this application;
FIG. 8 is a schematic diagram of a time division multiplexing scheduling frequency band according to an embodiment of this application;
FIG. 9 is another schematic flowchart of a Wi-Fi communication method according to an embodiment of this application;
FIG. 10 is a schematic diagram of communication of an access device according to an embodiment of this application;
FIG. 11 is a schematic diagram of communication of a station device according to an embodiment of this application;
FIG. 12 is another schematic diagram of communication of a station device according to an embodiment of this application;
FIG. 13 is still another schematic diagram of communication of a station device according to an embodiment of this application;
FIG. 14 is a schematic diagram of a structure of an access device according to an embodiment of this application;
FIG. 15 is another schematic diagram of a structure of an access device according to an embodiment of this application;
FIG. 16 is a schematic diagram of a structure of a station device according to an embodiment of this application; and
FIG. 17 is another schematic diagram of a structure of a station device according to an embodiment of this application.

### DESCRIPTION OF EMBODIMENTS

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. The character "/" generally indicates an "or" relationship between the associated objects. In addition, in embodiments of this application, words such as "first" and "second" do not limit a quantity and an execution order.

It should be noted that, in this application, terms such as an "example" or "for example" indicate an example, an instance, or an illustration. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

Before the technical solutions of this application are described below, related content of a wireless fidelity (wireless fidelity, Wi-Fi) technology in this application is first described.

Wi-Fi, also called a "wireless hotspot", is a wireless local area network technology based on an IEEE 802.11 standard formulated by a Wi-Fi Alliance. Since the release of the Wi-Fi technology, six generations of Wi-Fi systems (801.11, 802.11b, 802.11a/g, 802.11n, 802.11ac, 802.11ax) have been developed and popularized. Each generation of 802.11 Wi-Fi systems greatly increases a rate.

A channel (channel) is also referred to as a channel or a channel, is a channel for transmitting a signal in a communication system, and is formed by a transmission medium through which the signal is transmitted from a transmitting end to a receiving end. A wireless channel is a radio channel that uses a radiation radio wave as a transmission manner, namely, a channel for wireless data transmission. The 802.11 working group designates 2G and 5G frequency bands as wireless channels, and each frequency band is further divided into several channels.

In addition, the 802.11 working group further designates an operating frequency band of each channel, and a minimum interval between operating frequency bands of channels in a Wi-Fi communication system is 20 MHz. In the Wi-Fi communication system, only a channel that is allocated to Wi-Fi can be used for communication. A channel bandwidth is generally an integer multiple of 20 MHz. For example, the channel bandwidth may be 20 MHz, 40 MHz, 80 MHz, 160 MHz, or 320 MHz. A channel that is not allocated to the Wi-Fi cannot be used in the Wi-Fi communication system. For example, the channel bandwidth may be a channel of 5 MHz or 10 MHz.

In the Wi-Fi communication system, a wireless channel has a feature of having only one collision domain. Therefore, a random access mechanism needs to be introduced to avoid a collision problem caused by simultaneous access of a plurality of nodes to a network. The random access mechanism is carrier sense multiple access with collision avoidance (carrier sense multiple access with collision avoidance, CSMA/CA). The CSMA/CA mechanism is as follows: When a device learns that a channel is empty through listening, the device waits for one interframe space; then, the device listens to the channel again, and starts a random backoff process if the channel is still empty; and after the random backoff process, if the device learns that the channel is still empty through listening, the device starts to send data. In the foregoing process, if the channel becomes busy at any time, the foregoing process is terminated, and the device waits until the channel becomes empty again. Then, the foregoing process is repeated (that is, starting from waiting for the interframe space). Therefore, the CSMA/CA mechanism has a problem that it is difficult to ensure a latency and latency jitter.

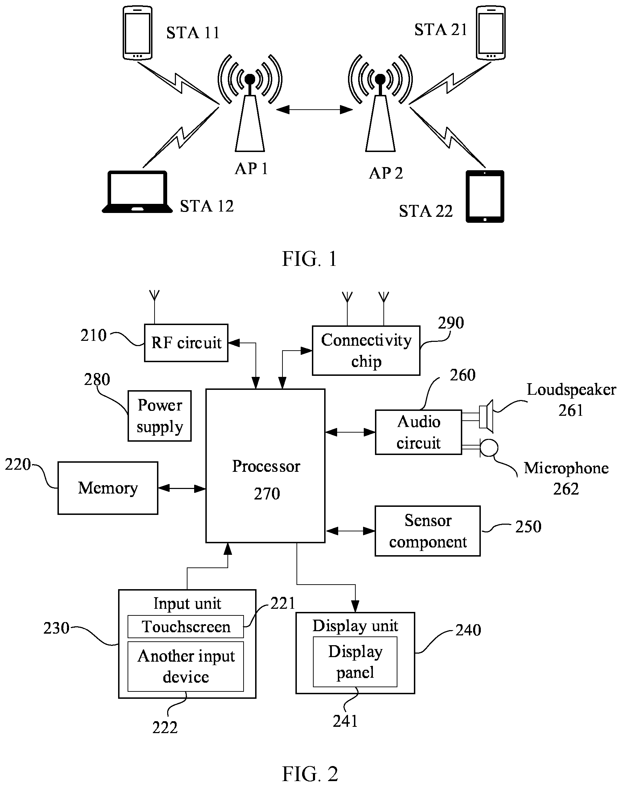

Based on this, embodiments of this application provide a Wi-Fi communication method. An AP in the method may perform scheduling on a scheduling frequency band (namely, a frequency band that is not allocated to Wi-Fi communication) according to a scheduling mechanism, to perform Wi-Fi communication with a STA based on the scheduling frequency band. For example, uplink data and/or downlink data is transmitted on the scheduling frequency band, to reduce a latency and latency jitter during Wi-Fi communication between the AP and the STA. The method may be applied to a Wi-Fi communication system, and the Wi-Fi communication system may also be referred to as a wireless local area network system. The following uses FIG. 1 as an example to describe the Wi-Fi communication system.

FIG. 1 is a schematic diagram of a structure of a Wi-Fi communication system according to an embodiment of this application. The Wi-Fi communication system includes one or more access points (access points, APs) and one or more stations (stations, STAs). One STA may access one or more APs, one or more STAs may also access one AP, and a plurality of APs may also communicate with each other. In FIG. 1, an example in which the Wi-Fi communication system includes an AP 1 and an AP 2, a STA 11 and a STA 12 access the AP 1, a STA 21 and a STA 22 access the AP 2, and the AP 1 and the AP 2 may communicate with each other is used for description.

The AP is a wireless access point, or may be referred to as a wireless AP. The AP is an access point of a wireless network, and is also a core of the wireless network. In the wireless network, the AP performs the following functions: managing a mobile station in a cell, including connection and authentication of the mobile station; completing a process of bridging data frames from a wired network to a basic service set (basic service set, BSS); implementing functions of address filtering and address learning; completing switching management of mobile stations between different BSSs; and providing simple network management. In addition, the AP may be used as extension of the wireless network, and is connected to another AP to extend coverage of the wireless network. The wireless AP is mainly used in a household broadband and inside a building and a campus, and may cover a distance of tens or hundreds of meters. Optionally, a device corresponding to the access point may be referred to as an access device, and the access device may be a communication server, a router, a switch, a network bridge, a computer, or the like.

The STA may also be referred to as a mobile station. The STA generally includes a wireless network interface card (for example, a wireless network card), and may be connected to the device of the AP via the wireless network interface card. Optionally, a device corresponding to the STA may be referred to as a station device. The station device may be a device such as a mobile phone, a tablet computer, an ultra-mobile personal computer (ultra-mobile personal computer, UMPC), a netbook computer, a wearable device (for example, a smart band and a smartwatch), or a vehicle-mounted device.

FIG. 2 is a schematic diagram of a structure of a Wi-Fi device according to an embodiment of this application. The Wi-Fi device may be an access device, or may be a station device. The following describes the structure of the Wi-Fi device by using an example in which the access device or the station device is a mobile phone. The mobile phone includes components such as a radio frequency (radio frequency, RF) circuit 210, a memory 220, an input unit 230, a display unit 240, a sensor component 250, an audio circuit 260, a processor 270, and a power supply 280.

The RF circuit 210 may be configured to receive a signal and send a signal in an information sending and receiving process or a call process. Generally, the RF circuit 210 includes but is not limited to an antenna, an amplifier, a transceiver, a coupler, an LNA (low noise amplifier, low noise amplifier), a duplexer, and the like. Optionally, the antenna may include a plurality of receiving antennas and a plurality of transmitting antennas. In addition, the RF circuit 210 may further communicate with a network and another device through wireless communication, for example, communicate with an AP through a Wi-Fi network.

The memory 220 may be configured to store a software program and a module. The processor 270 performs various function applications of the mobile phone and data processing by running the software program and the module that are stored in the memory 220. The memory 220 may mainly include a program storage area and a data storage area. The program storage area may store an operating system, an application program needed by at least one function, and the like. The data storage area may store data (such as audio data, image data, and a phone book) that is created based on use of the mobile phone, and the like. In addition, the memory 220 may include a high-speed random access memory, or may include a nonvolatile memory such as at least one magnetic disk storage device, a flash storage device, or another volatile solid-state storage device.

The input unit 230 may be configured to receive input digit or character information, and generate key signal input related to user setting and function control of the mobile phone. Specifically, the input unit 230 may include a touchscreen 231 and another input device 232. The touchscreen 231, also referred to as a touch panel, may collect a touch operation (for example, an operation performed by a user on or near the touchscreen 231 by using any proper object or accessory such as a finger or a stylus) performed by the user on or near the touchscreen 231, and drive a corresponding connection apparatus by using a preset program. The another input device 232 may include but is not limited to one or more of a physical keyboard, a function key (such as a volume control key or a power on/off key), a trackball, a mouse, a joystick, or the like.

The display unit 240 may be configured to display information entered by the user or information provided for the user, and various menus of the mobile phone. The display unit 240 may include a display panel 241. Optionally, the display panel 241 may be configured in a form of a liquid crystal display (liquid crystal display, LCD), an organic light-emitting diode (organic light-emitting diode, OLED), or the like. Further, the touchscreen 231 may cover the display panel 241. After detecting a touch operation performed on or near the touchscreen 231, the touchscreen 231 sends the touch operation to the processor 270 to determine a type of a touch event, and then the processor 270 provides corresponding visual output on the display panel 241 based on the type of the touch event. Although in the figure, the touchscreen 231 and the display panel 241 are used as two independent components to implement input and output functions of the mobile phone, in some embodiments, the touchscreen 231 and the display panel 241 may be integrated to implement the input and output functions of the mobile phone.

The sensor component 250 includes one or more sensors, and is configured to provide status evaluation in various aspects for the mobile phone. The sensor component 250 may include a temperature sensor, an acceleration sensor, a gyro sensor, a magnetic sensor, or a pressure sensor. The sensor component 250 may detect a temperature change of the mobile phone, acceleration/deceleration of the mobile phone, an orientation of the mobile phone, an on/off state of the mobile phone, relative positioning of the component, or the like. In addition, the sensor component 250 may further include an optical sensor, for example, a CMOS or CCD image sensor, and is used in an imaging application.

The audio circuit 260, a loudspeaker 261, and a microphone 262 may provide an audio interface between the user and the mobile phone. The audio circuit 260 may convert received audio data into an electrical signal and transmit the electrical signal to the loudspeaker 261, and the loudspeaker 261 converts the electrical signal into a sound signal for output. Additionally, the microphone 262 converts a collected sound signal into an electrical signal, and the audio circuit 260 receives the electrical signal, converts the electrical signal into audio data, and then outputs the audio data to the RF circuit 210, to send the audio data to, for example, another phone, or outputs the audio data to the memory 220 for further processing.

The processor 270 is a control center of the mobile phone and is connected to all parts of the entire mobile phone through various interfaces and lines, and performs various functions of the mobile phone and data processing by running or executing the software program and/or the module stored in the memory 220 and invoking data stored in the memory 220, to perform overall monitoring on the mobile phone. Optionally, the processor 270 may include one or more processing units. The processor 270 may integrate an application processor and a modem processor. The application processor mainly processes an operating system, a user interface, an application program, and the like. The modem processor mainly processes wireless communication. It may be understood that the foregoing modem processor may be not integrated into the processor 270.

The mobile phone further includes the power supply 280 (such as a battery) that supplies power to each component. Optionally, the power supply may be logically connected to the processor 270 by using a power management system, to implement functions such as charging and discharging management and power consumption management by using the power management system.

Further, the mobile phone may further include a connectivity (connectivity) chip 290, and a Wi-Fi chip may be integrated into the chip 290. In addition, the chip 290 may further integrate one or more of a Bluetooth module, a near field communication (near field communication, NFC) module, a global navigation satellite system (global navigation satellite system, GNSS) module, or a frequency modulation (frequency modulation, FM) module. Details are not described herein in this application.

A person skilled in the art may understand that the structure of the mobile phone shown in FIG. 2 does not constitute a limitation on the mobile phone, and the mobile phone may include more or fewer components than those shown in the figure, combine some components, or have different component arrangements.

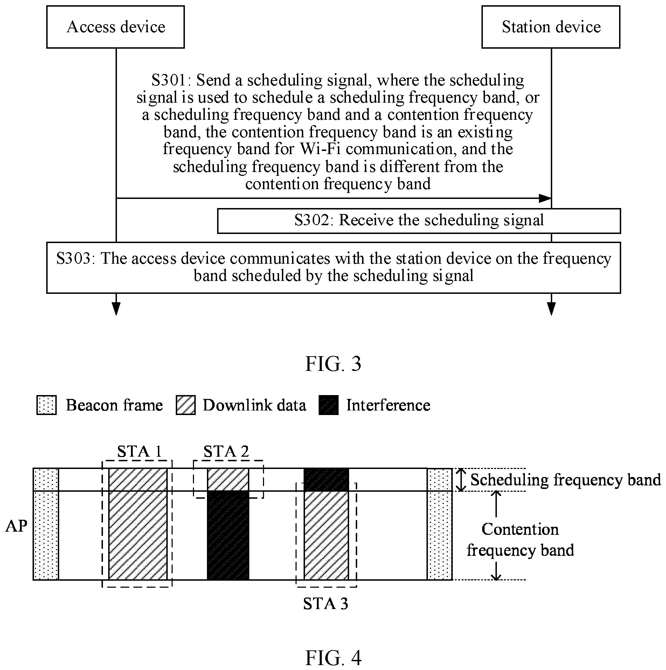

FIG. 3 is a schematic flowchart of a Wi-Fi communication method according to an embodiment of this application. The method may be applied to a Wi-Fi communication system, and the method includes the following steps.

S301: An access device sends a scheduling signal to a station device, where the scheduling signal is used to schedule a scheduling frequency band, or scheduling information and a contention frequency band.

The contention frequency band is an existing frequency band for Wi-Fi communication, the scheduling frequency band is different from the contention frequency band, and the scheduling frequency band may not be an existing frequency band for Wi-Fi communication. For example, the contention frequency band may be an existing frequency band that is in a 5G frequency band or a 2G frequency band and that is allocated to Wi-Fi communication, and the scheduling frequency band may be an existing frequency band that is in the 5G frequency band or the 2G frequency band and that is not allocated to the Wi-Fi communication.

In addition, the contention frequency band may also be understood as a frequency band for performing backoff based on an existing Wi-Fi protocol threshold according to a CSMA/CA mechanism. Relative to an existing Wi-Fi frequency band, the contention frequency band may also be understood as the existing frequency band allocated to the Wi-Fi communication. The scheduling frequency band may also be understood as a frequency band for performing backoff based on an energy detection threshold.

Optionally, a bandwidth of the contention frequency band may be an integer multiple of 20 MHz. For example, the bandwidth of the contention frequency band may be 20 MHz, 40 MHz, 80 MHz, 160 MHz, or the like. For example, the contention frequency band is a wireless channel frequency band of the 5G frequency band. The contention frequency band may be 5170 MHz to 5190 MHz, to be specific, the contention frequency band may be a frequency band of a channel 36 (with a bandwidth of 20 MHz) in the 5G frequency band. The bandwidth of the scheduling frequency band may be an integer multiple of non-20 MHz. For example, the bandwidth of the scheduling frequency band may be 5 MHz or 10 MHz. For example, the scheduling frequency band is a wireless channel frequency band of a 5G frequency band. The scheduling frequency band may be 5152.5 MHz to 5157.5 MHz, to be specific, the scheduling frequency band may be a frequency band of a channel 31 in the 5G frequency band. Optionally, the bandwidth of the scheduling frequency band may be less than the bandwidth of the contention frequency band.

For example, the following describes Wi-Fi communication frequency bands currently used in several countries or regions in the world by using examples. For example, in China, currently used wireless frequency bands may include the following frequency bands: 5180 MHz to 5350 MHz and 5725 MHz to 5850 MHz. A Wi-Fi communication frequency band in the 5180 MHz to 5350 MHz frequency band is 5180 MHz to 5330 MHz, and a Wi-Fi communication frequency band in the 5725 MHz to 5850 MHz frequency band is 5745 MHz to 5835 MHz. In the European region, currently used wireless frequency bands may include the following frequency bands: 5150 MHz to 5350 MHz, 5470 MHz to 5725 MHz, and 5945 MHz to 6425 MHz. An existing Wi-Fi communication frequency band in the 5150 MHz to 5350 MHz frequency band is 5180 MHz to 5350 MHz, a Wi-Fi communication frequency band in the 5470 MHz to 5725 MHz frequency band is 5500 MHz to 5710 MHz, and a Wi-Fi communication frequency band in the 5945 MHz to 6425 MHz frequency band is 5945 MHz to 6415 MHz. In the United States, currently used wireless frequency bands may include the following frequency bands: 5150 MHz to 5350 MHz, 5470 MHz to 5725 MHz, 5725 MHz to 5850 MHz, and 5925 MHz to 7125 MHz. A Wi-Fi communication frequency band in the 5150 MHz to 5350 MHz frequency band is 5180 MHz to 5330 MHz, a Wi-Fi communication frequency band in the 5470 MHz to 5725 MHz frequency band is 5500 MHz to 5710 MHz, a Wi-Fi communication frequency band in the 5470 MHz to 5725 MHz frequency band is 5745 MHz to 5835 MHz, and a Wi-Fi communication frequency band in the 5925 MHz to 7125 MHz frequency band is 5945 MHz to 7115 MHz. The contention frequency band in this embodiment of this application may be operating frequency bands corresponding to different channels designated by the 802.11 working group in the foregoing listed Wi-Fi communication frequency bands, and may also be referred to as an existing Wi-Fi communication frequency band.

In a possible embodiment, before sending the scheduling signal to the station device, the access device may further first determine the scheduling frequency band. That the access device determines the scheduling frequency band may refer to determining an available scheduling frequency band, and the available scheduling frequency band may also refer to a scheduling frequency band in an idle state. Optionally, the access device may perform backoff based on the energy detection threshold, to determine the scheduling frequency band. For example, the access device may detect air interface energy of the scheduling frequency band. If the energy is less than the detection threshold (for example, the detection threshold is -62 dBm), and the access device detects that the energy is still less than the detection threshold after a random backoff process, it may be determined that the scheduling frequency band is in the idle state. If energy detected in any detection process is greater than or equal to the detection threshold, the access device may determine that the scheduling frequency band is in a busy state, and the busy state may also be referred to as being unavailable.

In another possible embodiment, the access device may also determine the contention frequency band in a process of determining the scheduling frequency band. Optionally, the access device may perform backoff based on the foregoing energy detection threshold, to determine the contention frequency band; or the access device may detect the contention frequency band according to the CSMA/CA mechanism, and perform backoff based on the Wi-Fi protocol threshold used during detection. For example, the Wi-Fi protocol threshold is -82 dBm.

For example, if the access device determines that the scheduling frequency band is in the idle state and the contention frequency band is in the busy state, the access device may send the scheduling signal on the scheduling frequency band, where the scheduling signal may be used to schedule the scheduling frequency band; or if the access device determines that the scheduling frequency band is in the idle state and the contention frequency band is in the idle state, the access device may send the scheduling signal on the scheduling frequency band and/or the contention frequency band, where the scheduling signal may be used to schedule the scheduling frequency band and the contention frequency band. In actual application, if the access device determines that the scheduling frequency band is in the busy state and the contention frequency band is in the idle state, the access device may further send, on the contention frequency band, the scheduling signal used to schedule the contention frequency band.

Optionally, the scheduling frequency band and the contention frequency band may be contiguous or non-contiguous. For example, the scheduling frequency band may be 5165 MHz to 5170 MHz in the 5G frequency band, and the contention frequency band may be 5170 MHz to 5190 MHz in the 5G frequency band. In this case, the scheduling frequency band and the contention frequency band are contiguous. For another example, the scheduling frequency band may be 5152.5 MHz to 5157.5 MHz in the 5G frequency band, and the contention frequency band may be 5170 MHz to 5190 MHz in the 5G frequency band. In this case, the scheduling frequency band and the contention frequency band are non-contiguous.

S302: The station device receives the scheduling signal.

When the station device receives the scheduling signal, the station device may determine, based on the scheduling signal, scheduling of the access device. Related descriptions of the scheduling signal are consistent with the descriptions in S301. For details, refer to the related descriptions in S301. Details are not described herein again in this embodiment of this application.

S303: The access device communicates with the station device on the frequency band scheduled by using the scheduling signal.

After the station device receives the scheduling signal, the access device performs Wi-Fi communication with the station device based on the scheduling of the access device. For example, if the scheduling signal is used to schedule the scheduling frequency band, the station device and the access device may perform Wi-Fi communication on the scheduling frequency band; or if the scheduling signal is used to schedule the scheduling frequency band and the contention frequency band, the station device and the access device may perform Wi-Fi communication on the scheduling frequency band and the contention frequency band.

In this embodiment of this application, the access device may schedule the scheduling frequency band and/or the contention frequency band, to perform Wi-Fi communication with the station device on the scheduling frequency band and/or the contention frequency band. This avoids that the access device and the station device can perform communication only on the contention frequency band according to the CSMA/CA mechanism in the current technology, to reduce a latency and latency jitter of Wi-Fi communication, and reduce communication interference. In addition, when Wi-Fi communication is performed on both the scheduling frequency band and the contention frequency band, a communication bandwidth can be further increased, and a transmission rate can be increased. A latency of Wi-Fi communication performed on the scheduling frequency band is small, and a transmission requirement of most real-time service data, for example, real-time video data transmission, can be further satisfied.

Further, if the scheduling signal is used to schedule the scheduling frequency band, the access device may send downlink data to the station device on the scheduling frequency band, so that the station device may receive the downlink data on the scheduling frequency band. If the scheduling signal is used to schedule the contention frequency band, the access device may send the downlink data to the station device on the contention frequency band, so that the station device may receive the downlink data on the contention frequency band. If the scheduling signal is used to schedule the scheduling frequency band and the contention frequency band, the access device sends the downlink data to the station device on the scheduling frequency band and the contention frequency band, so that the station device may receive the downlink data on the scheduling frequency band and the contention frequency band.

For example, as shown in FIG. 4, that the scheduling frequency band is 5 MHz and the contention frequency band is 20 MHz is used as an example. It is assumed that a scheduling signal sent by the access device AP to a STA 1 is used to schedule the scheduling frequency band and the contention frequency band, a scheduling signal sent by the access device AP to a STA 2 is used to schedule the scheduling frequency band, and a scheduling signal sent by the access device AP to a STA 3 is used to schedule the contention frequency band. In this case, the access device AP may send downlink data to the STA 1 on the scheduling frequency band and the contention frequency band, send downlink data to the STA 2 on the scheduling frequency band, and send downlink data to the STA 3 on the contention frequency band. FIG. 4 is described by using an example in which the access device AP separately sends the downlink data to the STA 1, the STA 2, and the STA 3 in different slots on the scheduling frequency band and/or the contention frequency band.

When the access device sends the downlink data to the station device on the scheduling frequency band and the contention frequency band, the access device may separately send a downlink data frame on the scheduling frequency band and the contention frequency band, or may jointly send a downlink data frame on the scheduling frequency band and the contention frequency band. The following separately describes the two cases in detail.

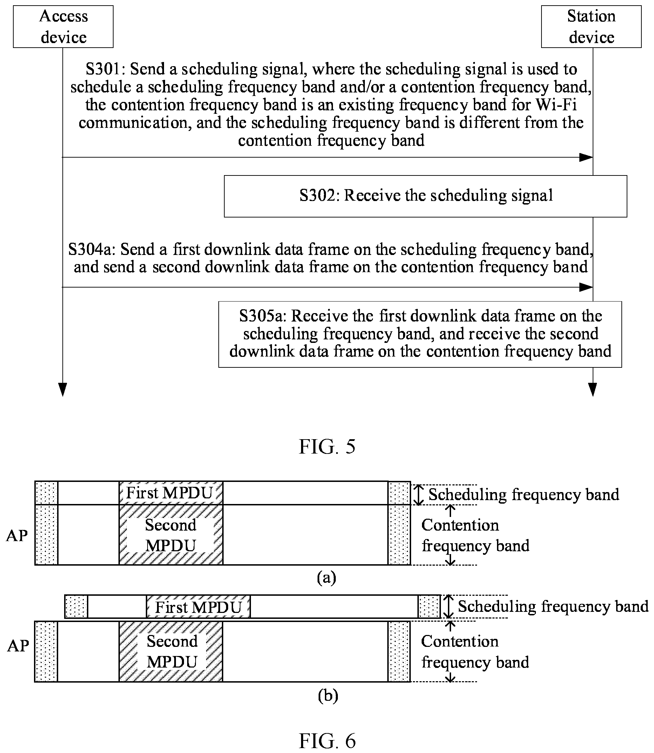

In a first case, the access device may separately send the downlink data frame on the scheduling frequency band and the contention frequency band. For example, as shown in FIG. 5, after S302, the method may further include S304a and S305a.

S304a: The access device sends a first downlink data frame to the station device on the scheduling frequency band, and sends a second downlink data frame to the station device on the contention frequency band.

The first downlink data frame may include a first media access control protocol data unit (media access control, protocol data unit, MPDU), to be specific, the first downlink data frame may include the first MPDU, and the second downlink data frame may include a second MPDU. For example, the scheduling frequency band is 5 MHz, and the contention frequency band is 20 MHz. A bandwidth of the first MPDU is 5 MHz, and a bandwidth of the second MPDU is 20 MHz.

Optionally, the first downlink data frame and the second downlink data frame may be independent of each other, or may be referred to as that the first MPDU and the second MPDU are independent of each other. That the first downlink data frame and the second downlink data frame are independent of each other may mean that modulation and demodulation of the first downlink data frame and the second downlink data frame are independent, and processes of modulation and demodulation of the first downlink data frame and the second downlink data frame may be performed independently without affecting each other.

In a possible embodiment, a frame header and a frame trailer of the first downlink data frame are respectively aligned with a frame header and a frame trailer of the second downlink data frame, which may also be referred to as that a frame header and a frame trailer of the first MPDU are respectively aligned with a frame header and a frame trailer of the second MPDU. For example, as shown in (a) in FIG. 6, if the access device AP supports only a single-input single-output communication mode, the access device AP may send the first MPDU and the second MPDU at the same time on the scheduling frequency band and the contention frequency band, where the frame header and the frame trailer of the first MPDU are respectively aligned with the frame header and the frame trailer of the second MPDU.

In another possible embodiment, the frame header and the frame trailer of the first downlink data frame may not be aligned with the frame header and the frame trailer of the second downlink data frame, which may also be referred to as that the frame header and the frame trailer of the first MPDU are respectively not aligned with the frame header and the frame trailer of the second MPDU. For example, as shown in (b) in FIG. 6, if the access device AP supports a multiple-input multiple-output communication mode, the access device AP may not send the first MPDU and the second MPDU at the same time on the scheduling frequency band and the contention frequency band, that is, the frame header and the frame trailer of the first MPDU are respectively not aligned with the frame header and the frame trailer of the second MPDU. For example, the frame header of the first MPDU is later than the frame header of the second MPDU.

Further, when the frame header and the frame trailer of the first downlink data frame are respectively aligned with the frame header and the frame trailer of the second downlink data frame, the first downlink data frame may include preamble information, and the preamble information indicates whether the second downlink data frame includes downlink data of the station device. For example, the preamble information includes a synchronization sequence and a signal field SIG, the synchronization sequence may include a short training sequence LSTF and a long time sequence LLTF, and 1 bit (bit) in the signal field SIG may indicate whether the second downlink data frame includes the downlink data of the station device.

S305a: The station device receives the first downlink data frame on the scheduling frequency band, and receives the second downlink data frame on the contention frequency band.

Specifically, the station device may separately detect a synchronization signal on the scheduling frequency band and the contention frequency band, and separately receive the first downlink data frame from the access device on the scheduling frequency band based on the detected synchronization signal and receive the second downlink data frame from the access device on the contention frequency band.

Optionally, when the station device receives the first downlink data frame, the station device may parse the first downlink data frame, for example, parse a signal field SIG of the first downlink data frame, and if the signal field SIG is correct, parse a payload of the first downlink data frame to obtain the first downlink data of the station device. When the station device receives the second downlink data frame on the contention frequency band, the station device may directly parse the second downlink data frame. Alternatively, when the first downlink data frame is aligned with the second downlink data frame, the station device may determine, based on the preamble information in the first downlink data frame, whether to parse the second downlink data frame. If the preamble information indicates that the second downlink data frame includes the downlink data of the station device, the station device may parse the second downlink data frame, for example, parse a signal field SIG of the second downlink data frame. If the signal field SIG is correct, a payload of the second downlink data frame is parsed to obtain second downlink data of the station device. If the preamble information indicates that the second downlink data frame does not include the downlink data of the station device, the station device may not parse the second downlink data frame.

Optionally, when the station device successfully parses the first downlink data frame, the station device may send a block acknowledgment (block acknowledge, BA) frame to the access device on the scheduling frequency band, to notify the access device that the first downlink data frame is successfully received. When the station device successfully parses the first downlink data frame and the second downlink data frame, the station device may separately send the BA frame to the access device on the scheduling frequency band and the contention frequency band, to notify the access device that the first downlink data frame and the second downlink data frame are successfully received.

In a possible embodiment, before S304a, the method may further include: The access device sends a first beacon frame on the scheduling frequency band, where the first beacon frame indicates basic service information of the access device; and when the station device receives the first beacon frame on the scheduling frequency band, the station device may access the access device on the scheduling frequency band based on the basic service information, that is, the access device provides an access service for the station device on the scheduling frequency band. Optionally, the scheduling signal may be included in the first beacon frame.

Optionally, the first beacon frame further includes one or more of a cycle of the first beacon frame, a channel indication of the scheduling frequency band, information about an available slot in the scheduling frequency band, quasi-static scheduling information, and the like. The cycle of the first beacon frame may be a cycle of sending a beacon frame by the access device on the scheduling frequency band. The channel indication indicates a channel corresponding to the scheduling frequency band. For example, the scheduling frequency band is 5152.5 MHz to 5157.5 MHz, that is, the channel indication may indicate that the scheduling frequency band is a channel 31. The information about the available slot indicates an available slot in the scheduling frequency band, and may be specifically an available slot corresponding to the access device on the scheduling frequency band. The quasi-static scheduling information may indicate scheduling-related information. For specific descriptions, refer to descriptions in the current technology. Details are not described herein in this embodiment of this application.

Correspondingly, before S304a, the method may further include: The access device sends a second beacon frame on the contention frequency band, where the second beacon frame indicates the basic service information of the access device and the scheduling frequency band; and when the station device receives the second beacon frame on the contention frequency band, the station device may access the access device on the scheduling frequency band based on the basic service information, that is, the access device provides the access service for the station device on the scheduling frequency band. Optionally, the scheduling signal may be included in the second beacon frame.

Optionally, if the first downlink data frame is aligned with the second downlink data frame, the first beacon frame and the second beacon frame may also be sent and ended at the same time, that is, the first beacon frame is aligned with the second beacon frame.

Optionally, the second beacon frame further includes a cycle of the second beacon frame, and may further include one or more of a channel indication of the scheduling frequency band, information about an available slot in the scheduling frequency band, quasi-static scheduling information, and the like. The cycle of the second beacon frame may be a cycle of sending a beacon frame by the access device on the contention frequency band. The channel indication, the information about the available slot, and the quasi-static scheduling information are similar to related content in the first beacon frame. Details are not described herein again in this embodiment of this application.

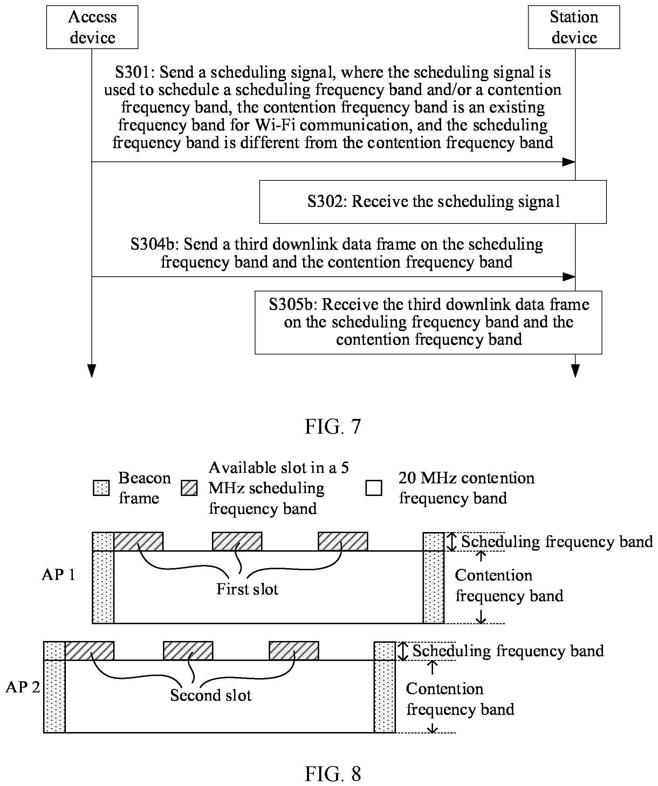

In a second case, the access device may jointly send the downlink data frame on the scheduling frequency band and the contention frequency band. For example, as shown in FIG. 7, after S302, the method may further include S304b and S305b.

S304b: The access device sends a third downlink data frame to the station device on the scheduling frequency band and the contention frequency band.

The third downlink data frame may include a third MPDU. For example, the scheduling frequency band is 5 MHz and the contention frequency band is 20 MHz. A bandwidth of the third MPDU sent by the access device on the scheduling frequency band and the contention frequency band is 25 MHz.

S305b: The station device receives the third downlink data frame on the scheduling frequency band and the contention frequency band.

Specifically, the station device may detect a synchronization signal on the scheduling frequency band and the contention frequency band, receive the third downlink data frame from the access device on the scheduling frequency band and the contention frequency band based on the detected synchronization signal, and parse the third downlink data frame, for example, parse a signal field SIG of the third downlink data frame. If the signal field SIG is correct, a payload of the third downlink data frame is parsed to obtain third downlink data of the station device.

Optionally, when the station device successfully parses the third downlink data frame, the station device may send a feedback response BA to the access device on the scheduling frequency band and the contention frequency band, to notify the access device that the third downlink data frame is successfully received.

In a possible embodiment, before S304b, the method may further include: The access device jointly sends a beacon frame on the scheduling frequency band and the contention frequency band, where the jointly sent beacon frame may indicate basic service information of the access device and the scheduling frequency band; and when the station device receives the beacon frame on the scheduling frequency band and the contention frequency band, the station device may access the access device on the scheduling frequency band and the contention frequency band based on the basic service information based on the beacon frame. Optionally, the scheduling signal may be included in the jointly sent beacon frame.

Optionally, the jointly sent beacon frame further includes a cycle of the beacon frame, and may further include one or more of a channel indication of the scheduling frequency band, information about an available slot in the scheduling frequency band, quasi-static scheduling information, and the like. The cycle of the beacon frame may be a cycle of the beacon frame jointly sent on the scheduling frequency band and the contention frequency band. The channel indication, the information about the available slot, and the quasi-static scheduling information are similar to related content in the first beacon frame. Details are not described herein again in this embodiment of this application.

Further, the scheduling frequency band or the available slot in the scheduling frequency band in any one of the foregoing two cases may be determined by the access device based on a received beacon frame of another access device. The access device and the another access device may use different scheduling frequency bands in a frequency division multiplexing manner, or use a same scheduling frequency band in different slots in a time division multiplexing manner.

When the access device and the another access device use different scheduling frequency bands in the frequency division multiplexing manner, the method may further include: The access device receives at least one third beacon frame from the another access device, where the at least one third beacon frame indicates the at least one scheduling frequency band; and the access device determines an available scheduling frequency band other than the at least one scheduling frequency band as the scheduling frequency band. For example, two access devices are represented as an AP 1 and an AP 2, and the available scheduling frequency bands include a frequency band 5152.5 MHz to 5157.5 MHz corresponding to a channel 31 and a frequency band 5157.5 MHz to 5162.5 MHz corresponding to a channel 32. In this case, when the AP 1 receives a beacon frame of the AP 2, and the scheduling frequency band indicated by the beacon frame is 5152.5 MHz to 5157.5 MHz, the AP 1 may select to use the scheduling frequency band 5157.5 MHz to 5162.5 MHz.

When the access device and the another access device use the same scheduling frequency band in the time division multiplexing manner, if the access device corresponds to a first slot in the scheduling frequency band, the method may further include: The access device receives at least one third beacon frame from the another access device, where the at least one third beacon frame indicates at least one second slot in the scheduling frequency band; and the access device determines an available slot other than the at least one second slot in the scheduling frequency band as the first slot in the scheduling frequency band. For example, as shown in FIG. 8, two access devices are respectively represented as an AP 1 and an AP 2, and the scheduling frequency band is a frequency band 5152.5 MHz to 5157.5 MHz corresponding to a channel 31. In this case, when the AP 1 receives a beacon frame of the AP 2, and the beacon frame indicates a second slot in the scheduling frequency band 5152.5 MHz to 5157.5 MHz, the AP 1 may use an available slot other than the second slot in the scheduling frequency band 5152.5 MHz to 5157.5 MHz as the first slot. In FIG. 8, an example in which both the first slot corresponding to the AP 1 and the second slot corresponding to the AP 2 include a plurality of slots is used for description.

In this embodiment of this application, the access device and another access device may use different scheduling frequency bands in the frequency division multiplexing manner, or may use different slots in a same scheduling frequency band in the time division multiplexing manner, to avoid interference between a plurality of access devices, and further reduce a latency and latency jitter of Wi-Fi communication.

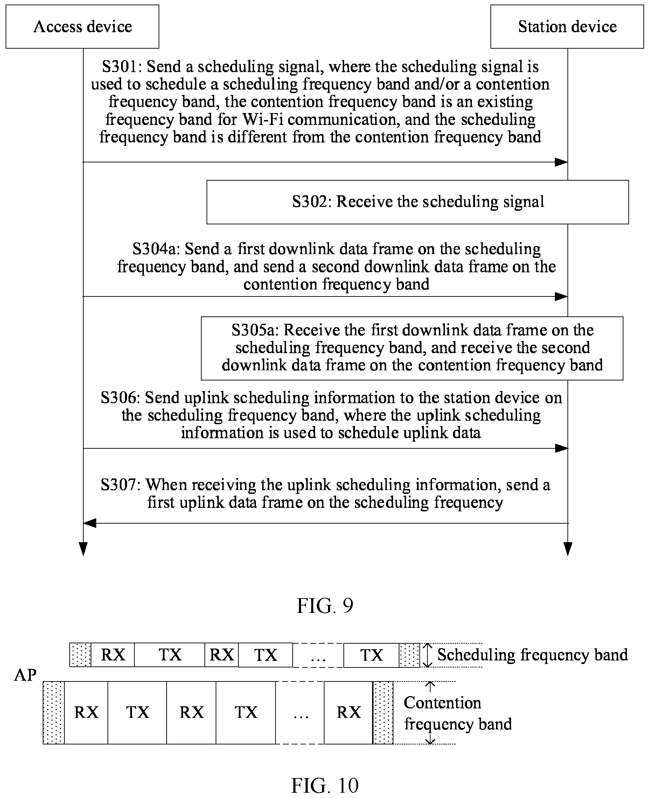

Further, with reference to any one of the possible method embodiments provided above, the method may further include the following steps. For example, with reference to the method provided in FIG. 5, as shown in FIG. 9, the method may further include S306 and S307.

S306: The access device sends uplink scheduling information to the station device on the scheduling frequency band, where the uplink scheduling information is used to schedule uplink data.

In a possible embodiment, the uplink scheduling information is included in a trigger frame, or the uplink scheduling information is sent in a form of a trigger frame. The trigger frame may be one of downlink data frames. For example, the first downlink data frame sent by the access device in the foregoing descriptions may be the trigger frame. In this way, when the station device receives the trigger frame, the station device may send the uplink data to the access device on the scheduling frequency band.

In another possible embodiment, the uplink scheduling information is included in a beacon frame (namely, the foregoing first beacon frame) corresponding to the scheduling frequency band. To be specific, when sending the first beacon frame on the scheduling frequency band, the access device may include the uplink scheduling information in the first beacon frame. In this way, when the station device receives the first beacon frame and accesses the access device, the station device may send the uplink data to the access device on the scheduling frequency band.

In still another possible embodiment, the uplink scheduling information may be sent based on an uplink request of the station device. The uplink request may be included in a trigger-based null data packet (trigger-based null data packet, TB NDP) frame, or the uplink request is carried in a BA frame of the station device.

The TB NDP frame may be sent by the station device based on the first beacon frame of the access device. For example, information indicating a slot in which the station device sends the TB NDP frame may be set in the first beacon frame. If the station device needs to send the uplink data, the station device may feed back the TB NDP frame to the access device in a corresponding slot. In this way, when receiving the TB NDP frame, the access device may send the trigger frame to the station device, so that the station device sends the uplink data to the access device on the scheduling frequency band when receiving the trigger frame.

In addition, the BA frame may be sent by the station device based on a downlink data frame of the access device. When receiving the downlink data frame (for example, the second downlink data frame) sent by the access device on the contention frequency band, the station device may send the BA frame to the access device, where the BA frame includes the uplink request, to request, by using the uplink request, the access device for the uplink data that needs to be sent. When the access device receives the BA frame, and determines, based on the uplink request in the BA frame, that the station device needs to send the uplink data, the access device may send the uplink scheduling information to the station device on the scheduling frequency band in the form of the trigger frame.

S307: When receiving the uplink scheduling information, the station device sends a first uplink data frame to the access device on the scheduling frequency band.

In a possible embodiment, the uplink scheduling information may indicate a slot in which the station device sends the uplink data on the scheduling frequency band, so that when receiving the uplink scheduling information, the station device may send the first uplink data frame to the access device in the slot that is in the scheduling frequency band and that is indicated by the uplink scheduling information. Optionally, the first uplink data frame may be a trigger-based (trigger-based, TB) frame, to be specific, the station device may send the uplink data to the access device on the scheduling frequency band in a form of the TB frame.

Optionally, in a process of sending the first uplink data frame, if the station device detects the contention frequency band according to the CSMA/CA mechanism and determines that the contention frequency band is in the idle state, the station device may further send a second uplink data frame to the access device on the contention frequency band.

Optionally, the first uplink data frame and the second uplink data frame may be independent of each other. In an example, if the station device supports only the single-input single-output communication mode, a frame header and a frame trailer of the first uplink data frame are respectively aligned with a frame header and a frame trailer of the second uplink data frame. In another example, if the station device supports the multiple-input multiple-output communication mode, the frame header and the frame trailer of the first uplink data frame may be respectively not aligned with the frame header and the frame trailer of the second uplink data frame.

It may be understood that the foregoing related descriptions of sending the first uplink data frame and the second uplink data frame by the station device are similar to the foregoing related descriptions of sending the first downlink data frame and the second downlink data frame by the access device. Details are not described herein again in this embodiment of this application.

Correspondingly, when the station device sends the first uplink data frame on the scheduling frequency band, the access device may receive the first uplink data frame on the scheduling frequency band. After receiving the first uplink data frame on the scheduling frequency band, the access device may further parse the first uplink data frame to obtain first uplink data of the station device.

Optionally, if the station device further sends the second uplink data frame to the access device on the contention frequency band in a process of sending the first uplink data frame, the access device may further receive the second uplink data frame from the station device on the contention frequency band. The access device may further parse the second uplink data frame to obtain second uplink data of the station device.

Further, if the station device supports only the scheduling frequency band, for example, the station device is an internet of things (internet of things, IoT) device and supports only a bandwidth of 5 MHz, the station device may access the access device on the scheduling frequency band, receive the first downlink data frame from the access device only on the scheduling frequency band, and send the first uplink data frame to the access device on the scheduling frequency band. Optionally, the station device may send the uplink request by using the TB NDP frame or the BA frame, or send the uplink data to the access device by using the TB frame.

For ease of understanding, the following describes several possible cases in which the access device and the station device separately perform Wi-Fi communication on the scheduling frequency band and the contention frequency band by using an example. In the following example for description, communication between the access device and each device in the station device on the scheduling frequency band and the contention frequency band is independent of each other, and uplink data and downlink data on a same frequency band are transmitted in different slots.

FIG. 10 shows a possible case in which the access device separately performs Wi-Fi communication on the scheduling frequency band and the contention frequency band. The access device may send a beacon frame on the scheduling frequency band, and then receive uplink data from the station device, and send downlink data to the station device on the scheduling frequency band. Similarly, the access device may send the beacon frame on the contention frequency band, and then receive the uplink data from the station device and send the downlink data to the station device on the contention frequency band. In FIG. 10, a state in which the access device sends the downlink data is referred to as a transmitting state (represented as TX), a state in which the access device receives the uplink data is referred to as a receiving state (represented as RX), and the access device is represented as an AP.

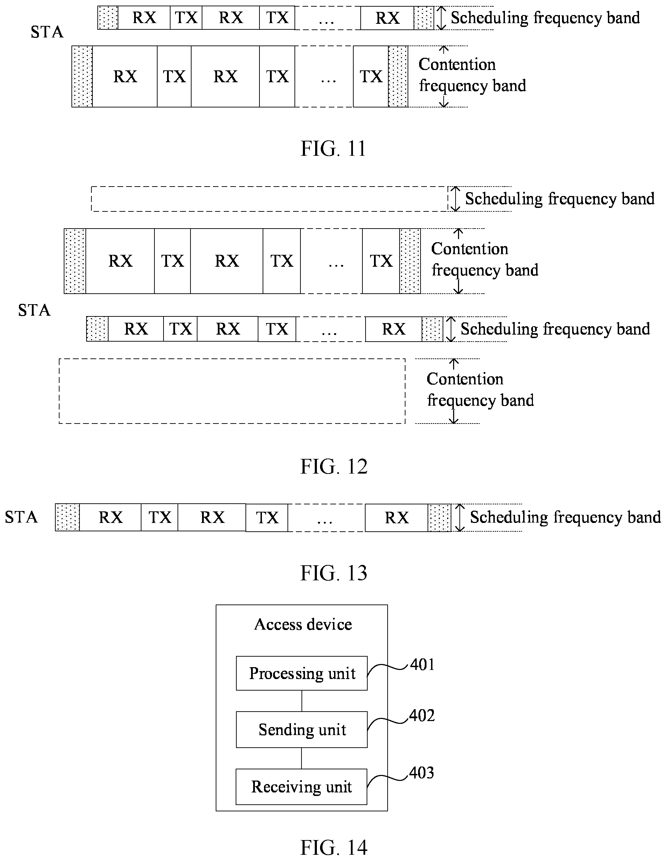

FIG. 11 shows a possible case in which the station device performs Wi-Fi communication on the scheduling frequency band and the contention frequency band. The station device supports performing Wi-Fi communication on both the scheduling frequency band and the contention frequency band. Specifically, after receiving a beacon frame from the access device on the scheduling frequency band, the station device may send uplink data to the access device and send downlink data to the access device on the scheduling frequency band. Similarly, after receiving the beacon frame from the access device on the contention frequency band, the station device may send the uplink data to the access device and send the downlink data to the access device on the contention frequency band. In FIG. 11, a state in which the access device sends the uplink data is referred to as a transmitting state (represented as TX), a state in which the station device receives the downlink data is referred to as a receiving state (represented as RX), and the station device is represented as a STA.

FIG. 12 shows a possible case in which the station device performs Wi-Fi communication on the scheduling frequency band and the contention frequency band. The station device may not support performing Wi-Fi communication on both the scheduling frequency band and the contention frequency band. Specifically, if the station device operates on the scheduling frequency band, after receiving a beacon frame from the access device on the scheduling frequency band, the station device may send uplink data to the access device and send downlink data to the access device on the scheduling frequency band. Similarly, if the station device operates on the contention frequency band, after receiving the beacon frame from the access device on the contention frequency band, the station device may send the uplink data to the access device and send the downlink data to the access device on the contention frequency band. In FIG. 12, a state in which the access device sends the uplink data is referred to as a transmitting state (represented as TX), a state in which the station device receives the downlink data is referred to as a receiving state (represented as RX), and the station device is represented as a STA.

FIG. 13 shows a possible case in which the station device performs Wi-Fi communication on the scheduling frequency band and the contention frequency band. The station device supports Wi-Fi communication only on the scheduling frequency band. Specifically, after receiving a beacon frame from the access device on the scheduling frequency band, the station device may send uplink data to the access device and send downlink data to the access device on the scheduling frequency band. In FIG. 13, a state in which the access device sends the uplink data is referred to as a transmitting state (represented as TX), a state in which the station device receives the downlink data is referred to as a receiving state (represented as RX), and the station device is represented as a STA.

Further, when the scheduling signal is used to schedule the scheduling frequency band and the contention frequency band, when communicating with the station device on the scheduling frequency band and the contention frequency band, the access device may transmit service data (for example, real-time video data or real-time call data) having a high latency requirement on the scheduling frequency band, and transmit service data (for example, web browsing or video downloading) having a low latency requirement on the contention frequency band.

Further, the scheduling signal may be further used to schedule a plurality of scheduling frequency bands, and the access device and the station device may further communicate on the plurality of scheduling frequency bands, for example, transmit at least one of uplink data or downlink data on the plurality of scheduling frequency bands; the scheduling signal is further used to schedule one scheduling frequency band and a plurality of contention frequency bands, and the access device may further communicate with the station device on the one scheduling frequency band and the plurality of contention frequency bands, for example, transmit at least one of uplink data or downlink data on the one scheduling frequency band and the plurality of contention frequency bands; or the scheduling signal is further used to schedule a plurality of scheduling frequency bands and a plurality of contention frequency bands. The access device may further communicate with the station device on the plurality of scheduling frequency bands and the plurality of contention frequency bands, for example, transmit at least one of uplink data or downlink data on the plurality of scheduling frequency bands and the plurality of contention frequency bands.

In a possible implementation embodiment, when the scheduling signal is used to schedule a plurality of frequency bands (where the plurality of frequency bands may include at least one scheduling frequency band and at least one contention frequency band), the station device may separately access the access device on the plurality of frequency bands, to correspondingly establish a plurality of connections on the plurality of frequency bands, so that the access device and the station device may communicate with each other by using the plurality of connections. Optionally, for any one of the plurality of connections, the access device and the station device may further switch the connection from one frequency band of the plurality of frequency bands to another frequency band. For example, the plurality of frequency bands include a first frequency band F1 and a second frequency band F2, a corresponding connection established on F1 is CONT1, and a corresponding connection established on F2 is CONT2. The access device and the station device may switch CONT1 to F2, and switch CONT2 to F1.

Optionally, the plurality of connections may refer to a plurality of connections at a physical layer, and the plurality of connections may be controlled by one media access control (media access control, MAC) controller. The MAC controller may allocate, based on switching of a corresponding connection, data corresponding to the plurality of connections to a corresponding frequency band for transmission. The foregoing connection may also be referred to as a physical link or a physical link. For example, a process of switching a connection between the access device and the station device to another frequency band may include: The access device sends a fourth beacon frame to the station device, where the fourth beacon frame carries an identifier of a connection that needs to be switched, a destination frequency band to which the connection needs to be switched, and a switching moment. In this way, when the station device receives the fourth beacon frame, the access device and the station device may switch the connection that needs to be switched to the destination frequency band at the switching moment. Further, when a plurality of station devices share one connection to communicate with the access device, the fourth beacon frame may further indicate at least one station device in the plurality of station devices to switch to a specified frequency band, and a station device other than the at least one station device may randomly switch to the another frequency band. The fourth beacon frame may further indicate the specified frequency band and the another frequency band.

Optionally, when the access device communicates with the station device by using a plurality of connections corresponding to a plurality of frequency bands, the access device and the station device may perform switching based on one or more of factors such as a type of a transmitted service, a busy or idle state of a channel, and device power consumption.

In this embodiment of this application, Wi-Fi communication may be performed between the access device and the station device on the scheduling frequency band, or the scheduling frequency band and the contention frequency band. The Wi-Fi communication may include transmission of the uplink data and the downlink data, to avoid that the access device and the station device can perform Wi-Fi communication only on the contention frequency band in the current technology, increase a frequency band for Wi-Fi communication, increase a transmission rate, reduce a latency and a latency jitter of Wi-Fi communication, and reduce communication interference, in addition, transmission requirements of most real-time service data can be satisfied. In addition, when the station device supports only the scheduling frequency band, the station device may further access the access device based on the scheduling frequency band, and perform Wi-Fi communication with the access device on the scheduling frequency band, so that a device that does not support Wi-Fi in the current technology can perform Wi-Fi communication, and a bandwidth of the scheduling frequency band is generally less than that of the contention frequency band. Using the scheduling frequency band to perform Wi-Fi communication can further reduce power consumption during communication.

The foregoing mainly describes, from a perspective of interaction between devices, the solutions provided in embodiments of this application. It may be understood that each network element, for example, an access device and a station device, to implement the foregoing functions, includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the access device and the station device may be divided into functional modules based on the foregoing method examples. For example, each functional module may be obtained through division based on each corresponding function, or two or more functions may be integrated into one module. The integrated module may be implemented in a form of hardware, or may be implemented in a form of a software functional module. It should be noted that, in embodiments of this application, module division is an example, and is merely logical function division. In actual implementation, another division manner may be used. An example in which each functional module is obtained through division based on each corresponding function is used below for description.

When an integrated unit is used, FIG. 14 is a possible schematic diagram of a structure of a Wi-Fi communication apparatus in the foregoing embodiments. The Wi-Fi communication apparatus may be an access device, and the apparatus includes a processing unit 401, a sending unit 402, and a receiving unit 403. The processing unit 401 is configured to support the apparatus in performing the steps of determining a scheduling frequency band and/or a contention frequency band in the foregoing method embodiment. The sending unit 402 is configured to support the apparatus in performing one or more steps of S301, S303, S304a (or S304b), or S306 in the foregoing method embodiment. The receiving unit 403 is configured to support the apparatus in performing the step of receiving uplink data in the foregoing method embodiment. All related content of each step involved in the foregoing method embodiment may be referenced to function descriptions of a corresponding functional module. Details are not described herein again.

Based on hardware implementation, the processing unit 401 in this application may be a processor of the apparatus, the sending unit 402 may be a transmitter of the apparatus, and the receiving unit 403 may be a receiver of the apparatus. The transmitter and the receiver may be generally integrated to serve as a transceiver. Specifically, the transceiver may also be referred to as a communication interface.

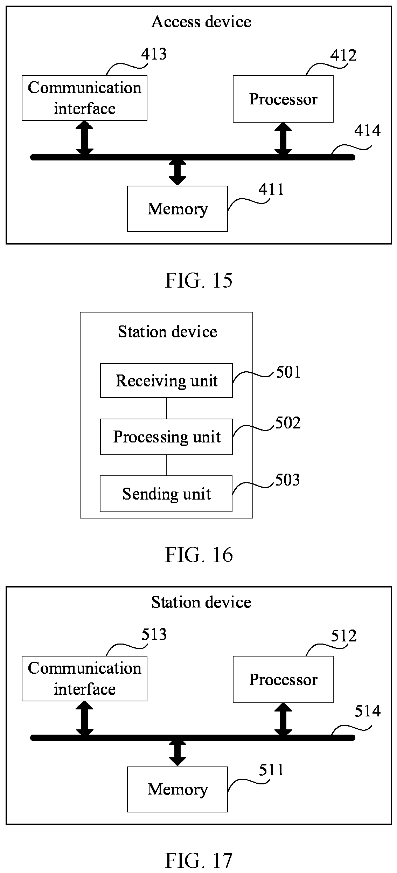

FIG. 15 is a possible schematic diagram of a logical structure of a Wi-Fi communication apparatus in the foregoing embodiment according to an embodiment of this application. The Wi-Fi communication apparatus may be an access device, and the apparatus includes a processor 412 and a communication interface 413. The processor 412 is configured to control and manage an action of the apparatus. For example, the processor 412 is configured to support the apparatus in performing the step of determining the scheduling frequency band and/or the contention frequency band in the foregoing method embodiment, and/or another process of the technology described in this specification. In addition, the apparatus may further include a memory 411 and a bus 414. The processor 412, the communication interface 413, and the memory 411 are connected to each other via the bus 414. The communication interface 413 is configured to support the apparatus in performing communication. The memory 411 is configured to store program code and data of the apparatus.

The processor 412 may be a central processing unit, a general-purpose processor, a digital signal processor, an application-specific integrated circuit, a field programmable gate array or another programmable logical device, a transistor logic device, a hardware component, or any combination thereof. The processor 412 may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 414 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 15, but this does not mean that there is only one bus or only one type of bus.

When an integrated unit is used, FIG. 16 is a possible schematic diagram of a structure of a Wi-Fi communication apparatus in the foregoing embodiments. The Wi-Fi communication apparatus may be a station device, and the apparatus includes a receiving unit 501, a processing unit 502, and a sending unit 503. The receiving unit 501 is configured to support the apparatus in performing one or more of the steps such as S302, S303, and S305a (or S305b) or receiving uplink scheduling information in the foregoing method embodiment. The processing unit 502 is configured to support the apparatus in performing one or more of the steps such as determining a scheduling frequency band and/or a contention frequency band, and accessing an access device in the foregoing method embodiment. The sending unit 503 is configured to support the apparatus in performing S307 and/or the step of sending other uplink data in the foregoing method embodiment. All related content of each step involved in the foregoing method embodiment may be referenced to function descriptions of a corresponding functional module. Details are not described herein again.

Based on hardware implementation, the processing unit 502 in this application may be a processor of the apparatus, the receiving unit 501 may be a receiver of the apparatus, and the sending unit 503 may be a transmitter of the apparatus. The transmitter and the receiver may be generally integrated to serve as a transceiver. Specifically, the transceiver may also be referred to as a communication interface.

FIG. 17 is a possible schematic diagram of a logical structure of a Wi-Fi communication apparatus in the foregoing embodiment according to an embodiment of this application. The Wi-Fi communication may be a station device, and the apparatus includes a processor 512 and a communication interface 513. The processor 512 is configured to control and manage an action of the apparatus. For example, the processor 512 is configured to support the apparatus in performing the steps of determining a scheduling frequency band and/or a contention frequency band, and accessing an access device in the foregoing method embodiment, and/or another process of the technology described in this specification. In addition, the apparatus further includes a memory 511 and a bus 514. The processor 512, the communication interface 513, and the memory 511 are connected to each other via the bus 514. The communication interface 513 is configured to support the apparatus in performing communication. The memory 511 is configured to store program code and data of the apparatus.

The processor 512 may be a central processing unit, a general-purpose processor, a digital signal processor, an application-specific integrated circuit, a field programmable gate array or another programmable logic device, a transistor logic device, a hardware component, or any combination thereof. The processor 512 may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 514 may be a peripheral component interconnect (PCI) bus, an extended industry standard architecture (EISA) bus, or the like. The bus may be classified into an address bus, a data bus, a control bus, and the like. For ease of representation, only one thick line is used to represent the bus in FIG. 17, but this does not mean that there is only one bus or only one type of bus.

In another embodiment of this application, a readable storage medium is further provided. The readable storage medium stores computer-executable instructions. When a device (which may be a single-chip microcomputer, a chip, or the like) or a processor performs the steps of the access device in the method embodiment provided in the foregoing method embodiment, the readable storage medium may include any medium that can store program code, such as a USB flash drive, a removable hard disk, a read-only memory, a random access memory, a magnetic disk, or an optical disc.

In another embodiment of this application, a readable storage medium is further provided. The readable storage medium stores computer-executable instructions. When a device (which may be a single-chip microcomputer, a chip, or the like) or a processor performs the steps of the station device in the method embodiment provided in the foregoing method embodiment, the readable storage medium may include any medium that can store program code, such as a USB flash drive, a removable hard disk, a read-only memory, a random access memory, a magnetic disk, or an optical disc.

In another embodiment of this application, a computer program product is further provided. The computer program product includes computer-executable instructions. The computer-executable instructions are stored in a computer-readable storage medium. At least one processor of a device may read the computer-executable instructions from the computer-readable storage medium. The at least one processor executes the computer-executable instructions to enable the device to perform the steps performed by the access device in the Wi-Fi communication method provided in the foregoing method embodiment.

In another embodiment of this application, a computer program product is further provided. The computer program product includes computer-executable instructions. The computer-executable instructions are stored in a computer-readable storage medium. At least one processor of a device may read the computer-executable instructions from the computer-readable storage medium. The at least one processor executes the computer-executable instructions to enable the device to perform the steps performed by the station device in the Wi-Fi communication method provided in the foregoing method embodiment.

In another embodiment of this application, a Wi-Fi communication system is further provided. The communication system includes an access device and a station device. The access device may be the Wi-Fi communication apparatus provided in FIG. 14 or FIG. 15, and is configured to perform the steps of the access device in the foregoing method embodiment. The station device may be the Wi-Fi communication apparatus provided in FIG. 16 or FIG. 17, and is configured to perform the steps of the station device in the foregoing method embodiment.

It should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A Wi-Fi communication method, wherein the method comprises:
sending, by an access device, a scheduling signal to a station device, wherein the scheduling signal is used to schedule a scheduling frequency band, or a scheduling frequency band and a contention frequency band, the contention frequency band is an existing frequency band for Wi-Fi communication, and the scheduling frequency band is different from the contention frequency band; and
communicating, by the access device, with the station device on the frequency band scheduled by using the scheduling signal.

2. The method according to claim 1, wherein the scheduling signal is used to schedule the scheduling frequency band and the contention frequency band, and the communicating, by the access device, with the station device on the frequency band scheduled by using the scheduling signal comprises:
sending, by the access device, a first downlink data frame to the station device on the scheduling frequency band, and sending a second downlink data frame to the station device on the contention frequency band.

3. The method according to claim 2, wherein a frame header and a frame trailer of the first downlink data frame are respectively aligned with a frame header and a frame trailer of the second downlink data frame.

4. The method according to claim 3, wherein the first downlink data frame comprises preamble information, and the preamble information indicates whether the second downlink data frame comprises downlink data of the station device.

5. The method according to any one of claims 2 to 4, wherein the first downlink data frame and the second downlink data frame are independent of each other.

6. The method according to claim 1, wherein the scheduling signal is used to schedule the scheduling frequency band and the contention frequency band, and the communicating, by the access device, with the station device on the frequency band scheduled by using the scheduling signal comprises:
sending, by the access device, a third downlink data frame to the station device on the scheduling frequency band and the contention frequency band.

7. The method according to any one of claims 1 to 6, wherein the method further comprises:
sending, by the access device, a first beacon frame on the scheduling frequency band, wherein the first beacon frame indicates basic service information of the access device, and the first beacon frame carries the scheduling signal; and
providing, by the access device, an access service for the station device on the scheduling frequency band based on the basic service information.

8. The method according to any one of claims 1 to 7, wherein the method further comprises:
sending, by the access device, a second beacon frame on the contention frequency band, wherein the second beacon frame indicates the basic service information of the access device and the scheduling frequency band, and the second beacon frame carries the scheduling signal; and
providing, by the access device, the access service for the station device on the scheduling frequency band based on the basic service information.

9. The method according to any one of claims 1 to 8, wherein the method further comprises:
sending, by the access device, uplink scheduling information to the station device on the scheduling frequency band, wherein the uplink scheduling information is used to schedule uplink data; and
receiving, by the access device, an uplink data frame from the station device on the scheduling frequency band.

10. The method according to claim 9, wherein the uplink scheduling information is carried in a trigger frame; or the uplink scheduling information is carried in a beacon frame corresponding to the scheduling frequency band; or the uplink scheduling information is sent based on an uplink request of the station device, wherein the uplink request is carried in a trigger-based null data packet TB NDP frame, or the uplink request is carried in a block acknowledgment BA frame of the station device.

11. The method according to any one of claims 1 to 10, wherein the method further comprises:
receiving, by the access device, at least one third beacon frame from another access device, wherein the at least one third beacon frame indicates at least one scheduling frequency band, or indicates at least one slot in the scheduling frequency band;
when the at least one third beacon frame indicates the at least one scheduling frequency band, determining, by the access device, an available scheduling frequency band other than the at least one scheduling frequency band as the scheduling frequency band; and
when the at least one third beacon frame indicates at least one second slot in the scheduling frequency band, determining, by the access device, to use an available slot other than the at least one slot in the scheduling frequency band.

12. A Wi-Fi communication method, wherein the method comprises:
receiving, by a station device, a scheduling signal from an access device, wherein the scheduling signal is used to schedule a scheduling frequency band, or a scheduling frequency band and a contention frequency band, the contention frequency band is an existing frequency band for Wi-Fi communication, and the scheduling frequency band is different from the contention frequency band; and
communicating, by the station device, with the access device on the frequency band scheduled by using the scheduling signal.

13. The method according to claim 12, wherein the scheduling signal is used to schedule the scheduling frequency band and the contention frequency band, and the communicating, by the station device, with the access device on the frequency band scheduled by using the scheduling signal comprises:
receiving, by the station device, a first downlink data frame from the access device on the scheduling frequency band, and receiving a second downlink data frame from the station device on the contention frequency band.

14. The method according to claim 13, wherein a frame header and a frame trailer of the first downlink data frame are respectively aligned with a frame header and a frame trailer of the second downlink data frame.

15. The method according to claim 14, wherein the first downlink data frame comprises preamble information, and the preamble information indicates whether the second downlink data frame comprises downlink data of the station device.

16. The method according to any one of claims 13 to 15, wherein the first downlink data frame and the second downlink data frame are independent of each other.

17. The method according to claim 12, wherein the scheduling signal is used to schedule the scheduling frequency band and the contention frequency band, and the communicating, by the station device, with the access device on the frequency band scheduled by using the scheduling signal comprises:
receiving, by the station device, a third downlink data frame from the access device on the scheduling frequency band and the contention frequency band.

18. The method according to any one of claims 12 to 17, wherein the method further comprises:
receiving, by the station device, a first beacon frame from the access device on the scheduling frequency band, wherein the first beacon frame indicates basic service information of the access device, and the first beacon frame carries the scheduling signal; and
accessing, by the station device, the access device on the scheduling frequency band based on the basic service information.

19. The method according to any one of claims 12 to 18, wherein the method further comprises:
receiving, by the station device, a second beacon frame from the access device on the contention frequency band, wherein the second beacon frame indicates the basic service information of the access device and the scheduling frequency band, and the second beacon frame carries the scheduling signal; and
accessing, by the station device, the access device on the scheduling frequency band based on the basic service information.

20. The method according to any one of claims 12 to 19, wherein the method further comprises:
receiving, by the station device, uplink scheduling information from the access device on the scheduling frequency band, wherein the uplink scheduling information is used to schedule uplink data; and
sending, by the station device, an uplink data frame to the access device on the scheduling frequency band based on the uplink scheduling information.

21. The method according to claim 20, wherein the uplink scheduling information is carried in a trigger frame; or the uplink scheduling information is carried in a beacon frame corresponding to the scheduling frequency band; or the uplink scheduling information is sent based on an uplink request of the station device, wherein the uplink request is carried in a trigger-based null data packet TB NDP frame, or the uplink request is carried in a block acknowledgment BA frame of the station device.

22. A Wi-Fi communication apparatus, wherein the apparatus comprises:
a sending unit, configured to send a scheduling signal to a station device, wherein the scheduling signal is used to schedule a scheduling frequency band, or a scheduling frequency band and a contention frequency band, the contention frequency band is an existing frequency band for Wi-Fi communication, and the scheduling frequency band is different from the contention frequency band; and
a processing unit, configured to communicate with the station device on the frequency band scheduled by using the scheduling signal.

23. The apparatus according to claim 22, wherein the scheduling signal is used to schedule the scheduling frequency band and the contention frequency band, and the sending unit is further configured to:
send a first downlink data frame to the station device on the scheduling frequency band, and send a second downlink data frame to the station device on the contention frequency band.

24. The apparatus according to claim 23, wherein a frame header and a frame trailer of the first downlink data frame are respectively aligned with a frame header and a frame trailer of the second downlink data frame.

25. The apparatus according to claim 24, wherein the first downlink data frame comprises preamble information, and the preamble information indicates whether the second downlink data frame comprises downlink data of the station device.

26. The apparatus according to any one of claims 23 to 25, wherein the first downlink data frame and the second downlink data frame are independent of each other.

27. The apparatus according to claim 22, wherein the scheduling signal is used to schedule the scheduling frequency band and the contention frequency band, and the sending unit is further configured to:
send a third downlink data frame to the station device on the scheduling frequency band and the contention frequency band.

28. The apparatus according to any one of claims 23 to 27, wherein
the sending unit is further configured to send a first beacon frame on the scheduling frequency band, wherein the first beacon frame indicates basic service information of the apparatus, and the first beacon frame carries the scheduling signal; and
the processing unit is further configured to provide an access service for the station device on the scheduling frequency band based on the basic service information.

29. The apparatus according to any one of claims 23 to 28, wherein
the sending unit is further configured to send a second beacon frame on the contention frequency band, wherein the second beacon frame indicates the basic service information of the apparatus and the scheduling frequency band, and the second beacon frame carries the scheduling signal; and
the processing unit is further configured to provide the access service for the station device on the scheduling frequency band based on the basic service information.

30. The apparatus according to any one of claims 23 to 29, wherein the apparatus further comprises a receiving unit, wherein
the sending unit is further configured to send uplink scheduling information to the station device on the scheduling frequency band, wherein the uplink scheduling information is used to schedule uplink data; and
the receiving unit is configured to receive an uplink data frame from the station device on the scheduling frequency band.

31. The apparatus according to claim 30, wherein the uplink scheduling information is carried in a trigger frame; or the uplink scheduling information is carried in a beacon frame corresponding to the scheduling frequency band; or the uplink scheduling information is sent based on an uplink request of the station device, wherein the uplink request is carried in a trigger-based null data packet TB NDP frame, or the uplink request is carried in a block acknowledgment BA frame of the station device.

32. The apparatus according to any one of claims 23 to 31, wherein the apparatus further comprises the receiving unit, wherein
the receiving unit is further configured to receive at least one third beacon frame from another access device, wherein the at least one third beacon frame indicates at least one scheduling frequency band, or indicates at least one slot in the scheduling frequency band;
the processing unit is further configured to: when the at least one third beacon frame indicates the at least one scheduling frequency band, determine an available scheduling frequency band other than the at least one scheduling frequency band as the scheduling frequency band; and
the processing unit is further configured to: when the at least one third beacon frame indicates the at least one slot in the scheduling frequency band, determine to use an available slot other than the at least one slot in the scheduling frequency band.

33. A Wi-Fi communication apparatus, wherein the apparatus comprises:
a receiving unit, configured to receive a scheduling signal from an access device, wherein the scheduling signal is used to schedule a scheduling frequency band, or a scheduling frequency band and a contention frequency band, the contention frequency band is an existing frequency band for Wi-Fi communication, and the contention frequency band is different from the scheduling frequency band; and
a processing unit, configured to communicate with the access device on the frequency band scheduled by using the scheduling signal.

34. The apparatus according to claim 33, wherein the scheduling signal is used to schedule the scheduling frequency band and the contention frequency band, and the receiving unit is further configured to:
receive a first downlink data frame from the access device on the scheduling frequency band, and receive a second downlink data frame from the apparatus on the contention frequency band.

35. The apparatus according to claim 34, wherein a frame header and a frame trailer of the first downlink data frame are respectively aligned with a frame header and a frame trailer of the second downlink data frame.

36. The apparatus according to claim 35, wherein the first downlink data frame comprises preamble information, and the preamble information indicates whether the second downlink data frame comprises downlink data of the station device.

37. The apparatus according to any one of claims 34 to 36, wherein the first downlink data frame and the second downlink data frame are independent of each other.

38. The apparatus according to claim 33, wherein the scheduling signal is used to schedule the scheduling frequency band and the contention frequency band, and the receiving unit is further configured to:
receive a third downlink data frame from the access device on the scheduling frequency band and the contention frequency band.

39. The apparatus according to any one of claims 33 to 38, wherein
the receiving unit is further configured to receive a first beacon frame from the access device on the scheduling frequency band, wherein the first beacon frame indicates basic service information of the access device, and the first beacon frame carries the scheduling signal; and
the processing unit is further configured to access the access device on the scheduling frequency band based on the basic service information.

40. The apparatus according to any one of claims 33 to 39, wherein
the receiving unit is further configured to receive a second beacon frame from the access device on the contention frequency band, wherein the second beacon frame indicates the basic service information of the access device and the scheduling frequency band, and the second beacon frame carries the scheduling signal; and
the processing unit is further configured to access the access device on the scheduling frequency band based on the basic service information.

41. The apparatus according to any one of claims 33 to 40, wherein the apparatus further comprises: a sending unit, wherein
the receiving unit is further configured to receive uplink scheduling information from the access device on the scheduling frequency band, wherein the uplink scheduling information is used to schedule uplink data; and
the sending unit is configured to send an uplink data frame to the access device on the scheduling frequency band based on the uplink scheduling information.

42. The apparatus according to claim 41, wherein the uplink scheduling information is carried in a trigger frame; the uplink scheduling information is carried in a beacon frame corresponding to the scheduling frequency band; or the uplink scheduling information is sent based on an uplink request of the station device, wherein the uplink request is carried in a trigger-based null data packet TB NDP frame, or the uplink request is carried in a block acknowledgment BA frame of the station device.

43. A Wi-Fi communication apparatus, wherein the apparatus comprises a memory, a processor, a system bus, and a communication interface, the memory stores code and data, the processor is connected to the memory via the system bus, and the processor runs the code in the memory, to enable the apparatus to perform the Wi-Fi communication method according to any one of claims 1 to 11.

44. A Wi-Fi communication apparatus, wherein the apparatus comprises a memory, a processor, a system bus, and a communication interface, the memory stores code and data, the processor is connected to the memory via the system bus, and the processor runs the code in the memory, to enable the apparatus to perform the Wi-Fi communication method according to any one of claims 12 to 21.

45. A Wi-Fi communication system, wherein the Wi-Fi communication system comprises an access device and a station device, wherein the access device is the Wi-Fi communication apparatus according to any one of claims 22 to 32 or claim 43, and the station device is the Wi-Fi communication apparatus according to any one of claims 33 to 42 or claim 44.
